(19) **Europäisches Patentamt / European Patent Office / Office européen des brevets**

(11) **EP 3 249 782 A1**

(12) **EUROPEAN PATENT APPLICATION**
published in accordance with Art. 153(4) EPC

(43) Date of publication:
**29.11.2017 Bulletin 2017/48**

(21) Application number: **15878682.2**

(22) Date of filing: **17.12.2015**

(51) Int Cl.:
*H02J 50/00* (2016.01)    *H01F 27/28* (2006.01)
*H02J 7/00* (2006.01)

(86) International application number:
**PCT/JP2015/006288**

(87) International publication number:
**WO 2016/116985 (28.07.2016 Gazette 2016/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.01.2015 JP 2015009338**

(71) Applicant: **Panasonic Intellectual Property Management Co., Ltd.**
**Osaka-shi, Osaka 540-6207 (JP)**

(72) Inventors:
• **TSUTSUI, Mami**
  **Osaka-shi**
  **Osaka 540-6207 (JP)**

• **KITAMURA, Hiroyasu**
  **Osaka-shi**
  **Osaka 540-6207 (JP)**
• **MATSUKI, Hidetoshi**
  **Osaka-shi**
  **Osaka 540-6207 (JP)**
• **SATO, Fumihiro**
  **Osaka-shi**
  **Osaka 540-6207 (JP)**
• **OTA, Yuki**
  **Osaka-shi**
  **Osaka 540-6207 (JP)**
• **AOKI, Shuta**
  **Osaka-shi**
  **Osaka 540-6207 (JP)**

(74) Representative: **Grünecker Patent- und Rechtsanwälte**
**PartG mbB**
**Leopoldstraße 4**
**80802 München (DE)**

(54) **POWER RECEPTION DEVICE, AND CONTACTLESS POWER TRANSMISSION DEVICE PROVIDED WITH SAME**

(57)    Power reception device (1) includes a plurality of secondary coils (22) which interlinks with magnetic flux output by primary coil (15) and at least one power reception side capacitor (23, 24) electrically connected to the plurality of secondary coils (22), and receives power without contact from power transmission device (10) including primary coil (15). The plurality of secondary coils (22) are connected in series to each other. Central axes of the plurality of secondary coils (22) are oriented in mutually different directions. The plurality of secondary coils (22) and power reception side capacitors (23, 24) configure one power reception side resonance circuit (21). According to the present aspect, power reception side resonance circuit can be easily designed, and a decrease of power transmission efficiency can be suppressed.

FIG. 1

**Description**

TECHNICAL FIELD

The present disclosure relates to a contactless power transmission device, and particularly, to a power reception device thereof.

BACKGROUND ART

Recently, a contactless power transmission device has been known which transmits power from a power transmission device to a power reception device by interlinking magnetic flux output by a primary coil of the power transmission device with a secondary coil of the power reception device.

In the contactless power transmission device, efficiency of contactless power transmission (hereinafter, referred to as power transmission) from a power transmission device to a power reception device changes depending on a direction of a secondary coil with respect to a primary coil, and thus, directionality of power transmission is strong.

In a case where the secondary coil is not in a direction which efficiently interlinks with the magnetic flux output by the primary coil, power transmission efficiency decreases, and thus, development of a contactless power transmission device which can suppress a decrease in the power transmission efficiency depending on a direction of a power reception device with respect to a power transmission device, is promoted.

A power reception device in a contactless power transmission device described in PTL 1 includes a plurality of auxiliary coils disposed between a primary coil and a secondary coil, as an example. Central axes of the plurality of auxiliary coils are different from each other. Magnetic flux output by the auxiliary coil having the central axis which is orthogonal to the central axis of the secondary coil, among the plurality of auxiliary coils, efficiently interlinks with the secondary coil by a magnetic core on which a secondary coil is wound.

According to the aforementioned related art, even in a case where a direction of the power reception device changes with respect to the power transmission device, the magnetic flux output by the primary coil efficiently interlinks with one of the auxiliary coils. The magnetic flux output by the auxiliary coil interlinks with the secondary coil, and thus, the power transmission efficiency is hard to decrease.

Citation List

Patent Literature

PTL 1: Japanese Patent Unexamined Publication No. 2014-036545

SUMMARY OF THE INVENTION

In the aforementioned related art, a power reception side resonance circuit is configured in each auxiliary coil, and self-inductance of the auxiliary coil and capacitance of a capacitor included in the power reception side resonance circuit are set such that the power reception side resonance circuit resonates with a power transmission side resonance circuit including a primary coil. Thereby, impedance matching (hereinafter, referred to as load matching) between a power transmission device and a power reception device can be taken.

A plurality of auxiliary coils is classified into auxiliary coils which efficiently interlink with magnetic flux output by the primary coil and auxiliary coils which do not efficiently interlink with the magnetic flux output by the primary coil, depending on a direction of a secondary coil with respect to the primary coil.

The auxiliary coil which does not efficiently interlink with the magnetic flux of the primary coil, that is, slightly interlinks with the magnetic flux of the primary coil, outputs magnetic flux in accordance with the magnetic flux of the primary coil. Since the plurality of auxiliary coils output magnetic flux by interlinking with the magnetic flux of the primary coil, magnetic flux of the auxiliary coils interlink with each other. That is, the plurality of auxiliary coils magnetically interfere with each other.

If a power reception side resonance circuit is designed without considering magnetic interference of the plurality of auxiliary coils, a frequency of the power reception side resonance circuit has a different value from a resonance frequency set in advance. Accordingly, power transmission efficiency decreases. Meanwhile, if each power reception side resonance circuit is designed by considering magnetic interference of the plurality of auxiliary coils, design of each power reception side resonance circuit is complicated.

An object of the present disclosure is to provide a contactless power transmission device in which a power reception side resonance circuit can be easily designed and a decrease of power transmission efficiency can be suppressed, and a power reception device thereof.

A power reception device according to an aspect of the present disclosure is a power reception device which receives power without contact from a power transmission device including a primary coil, and includes a plurality of secondary coils that interlinks with magnetic flux which is output by the primary coil and at least one power reception side capacitor that is electrically connected to the plurality of secondary coils.

The plurality of secondary coils are connected in series to each other. Central axes of the plurality of secondary coils are oriented in mutually different directions. The plurality of secondary coils and the power reception side capacitor configure one power reception side resonance circuit.

According to the present aspect, a power reception side resonance circuit can be easily designed and a decrease of power transmission efficiency can be suppressed.

BRIEF DESCRIPTION OF DRAWINGS

FIG. 1 is a circuit diagram of a contactless power transmission device according to an exemplary embodiment.

FIG. 2 is a perspective view of a secondary coil according to the exemplary embodiment.

FIG. 3A is a perspective view of the contactless power transmission device in which an electric shaver including a power reception device is in an upright state with respect to a power transmission device.

FIG. 3B is a perspective view illustrating a relationship between the secondary coil and a primary coil of FIG. 3A.

FIG. 4A is a perspective view of the contactless power transmission device in which the electric shaver including the power reception device is in a lying state with respect to the power transmission device.

FIG. 4B is a perspective view illustrating a relationship between the secondary coil and a primary coil of FIG. 4A.

FIG. 5 is a perspective view of the secondary coil according to one modification example.

FIG. 6 is a perspective view of the secondary coil according to another modification example.

DESCRIPTION OF EMBODIMENTS

[1] A power reception device according to an aspect of the present disclosure is a power reception device which receives power without contact from a power transmission device including a primary coil, and includes a plurality of secondary coils that interlinks with magnetic flux which is output by the primary coil and at least one power reception side capacitor that is electrically connected to the plurality of secondary coils.

The plurality of secondary coils are connected in series to each other. Central axes of the plurality of secondary coils are oriented in mutually different directions. The plurality of secondary coils and the power reception side capacitor configure one power reception side resonance circuit.

According to the present aspect, although a direction of a power reception device with respect to a power transmission device changes, magnetic flux output by a primary coil efficiently interlinks with at least one of the plurality of secondary coils by the plurality of secondary coils in which directions of central axes are different from each other. Thereby, a decrease of power transmission efficiency can be suppressed, and directionality of power transmission is weakened.

As a power reception side resonance circuit of a power reception device resonates with a power transmission side resonance circuit of a power transmission device, load matching can be taken. Since one power reception side resonance circuit is configured by a plurality of secondary coils, it is possible to design the power reception side resonance circuit by considering influence on a resonance frequency of the power reception side resonance circuit due to magnetic interference between the plurality of secondary coils.

As a result, a power reception side resonance circuit can be easily designed and a decrease of power transmission efficiency can be suppressed.

[2] According to the power reception device of the aspect of the present disclosure, the power reception side capacitor includes a series resonance capacitor which is connected in series to the plurality of secondary coils, and a parallel resonance capacitor which is connected in parallel with the plurality of secondary coils. According to the present aspect, an applicable range of a size of a load can be expanded.

[3] According to the power reception device of the aspect of the present disclosure, the plurality of secondary coils include a first power reception coil and a second power reception coil.

[4] According to the power reception device of the aspect of the present disclosure, capacitance Cs of the series resonance capacitor satisfies Expression (1) and Capacitance Cp of the parallel resonance capacitor satisfies Expression (2).

$$C_s = \frac{1}{\omega(r_1+r_2)} \cdot \frac{1}{Q_2 - \sqrt{\frac{R}{r_1+r_2}\sqrt{1+k^2 \cdot Q_t \cdot Q_1} - (1+k^2 \cdot Q_t \cdot Q_1)}} \tag{1}$$

$$\left( Q_1 = \frac{\omega(L_1+L_2)}{r_1+r_2}, \; Q_2 = \frac{\omega L_t}{r_t} \right)$$

$$C_p = \frac{1}{\omega R} \sqrt{\frac{R}{(r_1+r_2)\sqrt{1+k^2 \cdot Q_t \cdot Q_1}} - 1} \tag{2}$$

where $\omega$ is an angular frequency ($\omega = 2\pi f$),
$r_1$ is resistance of a first power reception coil,
$r_2$ is resistance of a second power reception coil,
rt is resistance of the primary coil,
$Q_1$ is a characteristic value obtained by adding a characteristic value of the first power reception coil to a characteristic value of the second power reception coil,
$Q_t$ is a characteristic value of the primary coil,
R is a load electrically connected to a power reception device,
k is a coupling coefficient between the primary coil and the secondary coils,
$L_1$ is self-inductance of the first power reception coil,
$L_2$ is self-inductance of the second power reception coil, and
$L_t$ is self-inductance of the primary coil.

According to the present aspect, load matching can be taken by setting capacitances to the series resonance capacitor obtained by Expression (1) and capacitance of the parallel resonance capacitor obtained by Expression (2).
[5] According to the power reception device of the aspect of the present disclosure, a central axis of the first power reception coil is orthogonal to a central axis of the second power reception coil.
According to the present aspect, a central axis of a primary coil is parallel with the central axis of any one of the two power reception coils in a state where the power reception device is in an upright state with respect to a power transmission device, and the central axis of the primary coil is parallel with other central axes in a state where the power reception device is in a lying state with respect to the power transmission device.
Thereby, in a state where the power reception device is in both the upright state and the lying state with respect to the power transmission device, a decrease of power transmission efficiency is suppressed and directionality of power transmission is weakened.
[6] According to the power reception device of the aspect of the present disclosure, the plurality of secondary coils includes a first power reception coil, a second power reception coil, and a third power reception coil.
[7] According to the power reception device of the aspect of the present disclosure, two power reception coils of the central axis of the first power reception coil, the central axis of the second power reception coil, and the central axis of the third power reception coil are orthogonal to each other.
According to the present aspect, in a case where the central axis of the primary coil is orthogonal to the central axis of the first power reception coil and the central axis of the second power reception coil, the central axis of the primary coil is not orthogonal to the central axis of the third power reception coil.
Accordingly, although the power reception device is in a state other than an upright state and a lying state with respect to power transmission device, a decrease of power transmission efficiency is suppressed, and directionality of power transmission is weakened.
[8] According to the power reception device of the aspect of the present disclosure, the central axis of the first power reception coil, the central axis of the second power reception coil, and the central axis of the third power reception coil are orthogonal to each other.

According to the present aspect, in a case where the central axis of the primary coil is orthogonal to the central axis of the first power reception coil and the central axis of the second power reception coil, the central axis of the primary coil is parallel with the central axis of the third power reception coil.

Accordingly, although the power reception device is in a state other than an upright state and a lying state with respect to power transmission device, a decrease of power transmission efficiency is further suppressed, and directionality of power transmission is further weakened.

[9] According to the power reception device of the aspect of the present disclosure, the plurality of secondary coils is wound in an overlapping manner. According to the present aspect, disposition spaces of the plurality of secondary coils can be reduced, compared with a configuration in which the plurality of secondary coils are disposed at separated positions from each other.

[10] A contactless power transmission device according to an aspect of the present disclosure includes the power reception device described in any one of aforementioned [1] to [9].

(EXEMPLARY EMBODIMENT)

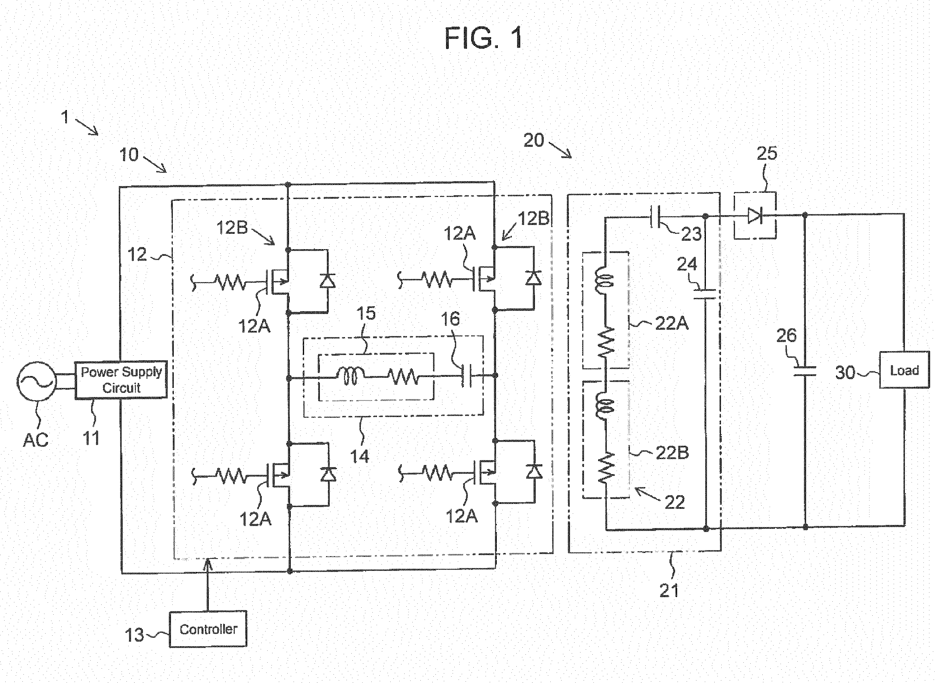

FIG. 1 is a circuit diagram of a contactless power transmission device according to an exemplary embodiment. A configuration of contactless power transmission device 1 will be described with reference to FIG. 1.

Contactless power transmission device 1 includes power transmission device 10 connected to ac power supply AC, power reception device 20 receiving power transmitted from power transmission device 10, and load 30 such as a secondary coil electrically connected to power reception device 20.

Power transmission device 10 includes power supply circuit 11 which is electrically connected to ac power supply AC and converts ac power of ac power supply AC into dc power. Power supply circuit 11 is connected to switching circuit 12 which converts dc power generated by power supply circuit 11 into ac power with a frequency set in advance.

Switching circuit 12 includes two arms 12B connected in parallel with each other. Arm 12B is configured by one set of FETS 12A connected in series to each other. Switching circuit 12 is connected to controller 13 which controls an operation of FET 12A and resonance circuit 14 which resonates at reference frequency fs set in advance. Resonance circuit 14 includes primary coil 15 and capacitor 16, and corresponds to power transmission side resonance circuit.

Power reception device 20 includes resonance circuit 21 which resonates at reference frequency fs. Resonance circuit 21 is connected to rectification circuit 25 which converts ac power generated by resonance circuit 21 into dc power, and smoothing capacitor 26 which smoothes dc power converted by rectification circuit 25. Resonance circuit 21 corresponds to a power reception side resonance circuit.

Resonance circuit 21 includes secondary coils 22, resonance capacitor 23, and resonance capacitor 24. Secondary coils 22 includes power reception coil 22A and power reception coil 22B.

Resonance capacitor 23 and resonance capacitor 24 respectively correspond to series resonance capacitor, parallel resonance capacitor. Both resonance capacitor 23 and resonance capacitor 24 correspond to power reception side capacitor. Power reception coil 22A and power reception coil 22B respectively correspond to first and second power reception coils.

Power reception coil 22A is connected in series to power reception coil 22B. Resonance capacitor 23 is connected in series to power reception coils 22A and 22B. Resonance capacitor 24 is connected in parallel with power reception coils 22A and 22B.

Power reception coil 22A and resonance capacitor 23 configure a series resonance circuit, and power reception coil 22B and resonance capacitor 23 also configure series resonance circuit. Power reception coil 22A and resonance capacitor 24 configure a parallel resonance circuit, and power reception coil 22B and resonance capacitor 24 also configure parallel resonance circuit.

Resistances, self-impedances, and characteristic values (Q values) of power reception coils 22A and 22B and capacitances of resonance capacitors 23 and 24 are set such that resonance circuit 14 resonates with resonance circuit 21, that is, a frequency of resonance circuit 21 coincides with reference frequency fs, and load matching is taken.

In the exemplary embodiment, since the resistances, the self-impedances, and the characteristic values (Q values) of power reception coils 22A and 22B are determined in advance, the load matching is taken by selecting the capacitance of resonance capacitor 23 and the capacitance of resonance capacitor 24.

Capacitance Cs of resonance capacitor 23 and capacitance Cp of resonance capacitor 24 for load matching between resonance circuit 14 and resonance circuit 21 are obtained by following Expression (1) and Expression (2).

$$C_s = \frac{1}{\omega(r_1+r_2)} \cdot \frac{1}{Q_2 - \sqrt{\frac{R}{r_1+r_2}}\sqrt{1+k^2 \cdot Q_t \cdot Q_1} - (1+k^2 \cdot Q_t \cdot Q_1)} \qquad (1)$$

$$\left( Q_1 = \frac{\omega(L_1+L_2)}{r_1+r_2}, \ Q_2 = \frac{\omega L_t}{r_t} \right)$$

$$C_p = \frac{1}{\omega R}\sqrt{\frac{R}{(r_1+r_2)\sqrt{1+k^2 \cdot Q_t \cdot Q_1}} - 1} \qquad (2)$$

Here, "$\omega$" is an angular frequency ($\omega = 2\pi f$, "f" is a frequency). "r1" is resistance of power reception coil 22A. "r2" is resistance of power reception coil 22B. "rt" is resistance of primary coil 15. "Q1" is a characteristic value obtained by adding a characteristic value of power reception coil 22A to a characteristic value of power reception coil 22B.

"Qt" is a characteristic value of primary coil 15. "L1" is self-inductance of power reception coil 22A. "L2" is self-inductance of power reception coil 22B. "Lt" is self-inductance of primary coil 15. "k" is a coupling coefficient between primary coil 15 and secondary coils 22. "R" is a size of load 30.

Any one of the coupling coefficient between primary coil 15 and power reception coil 22A and the coupling coefficient between primary coil 15 and power reception coil 22B is used as "k".

Hereinafter, power transmission of contactless power transmission device 1 will be described.

If switching circuit 12 starts to operate under control of controller 13, alternate power of reference frequency fs is supplied to primary coil 15, and alternate magnetic flux occurs in primary coil 15.

If power reception coils 22A and 22B interlink with alternate magnetic flux thereof, alternate power with reference frequency fs is generated in power reception coils 22A and 22B. Rectification circuit 25 and smoothing capacitor 26 convert alternate power thereof into dc power and smoothes the dc power. The dc power is supplied to load 30.

Here, a configuration of secondary coils 22 will be described.

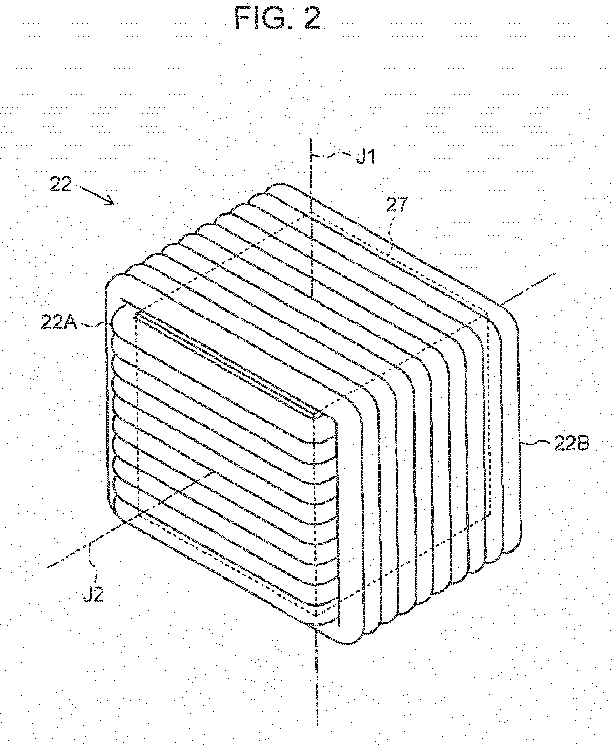

FIG. 2 is a perspective view of secondary coils 22. As illustrated in FIG. 2, conductive wires are wound in magnetic core 27 formed in a cube, and thereby, power reception coil 22A is formed.

Power reception coil 22B is wound on power reception coil 22A in an overlapping manner, such that central axis J2 of power reception coil 22B is orthogonal to central axis J1 of power reception coil 22A. That is, power reception coil 22A shares core 27 with power reception coil 22B.

Power reception coil 22A has the same number of turns as power reception coil 22B. Conductive wires configuring power reception coil 22A have the same outer diameter as conductive wires configuring power reception coil 22B.

According to the above configuration, the coupling coefficient between power reception coil 22A and primary coil 15 (refer to FIG. 1) coincides with the coupling coefficient between power reception coil 22B and primary coil 15.

Next, electric shaver 40 that is power reception device 20 including secondary battery 41 as load 30 will be described.

In the below description, "comparative power reception device" is a comparative target of power reception device 20. The comparative power reception device is different from power reception device 20 including a first resonance circuit configured by power reception coil 22A and the series resonance capacitor, and a second resonance circuit configured by power reception coil 22B and a series resonance capacitor.

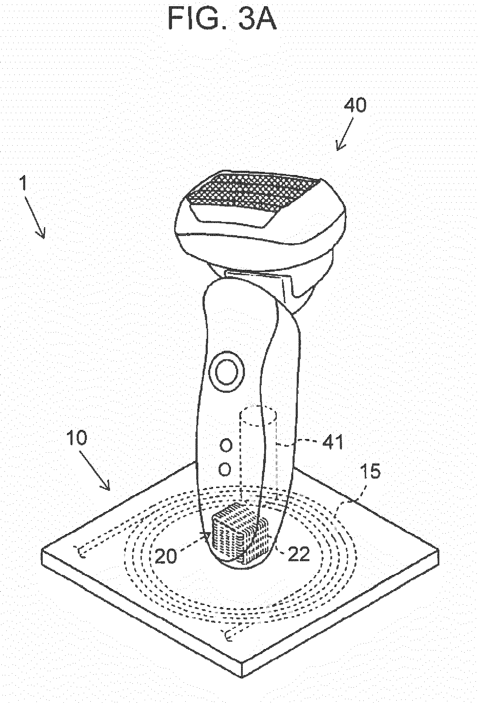

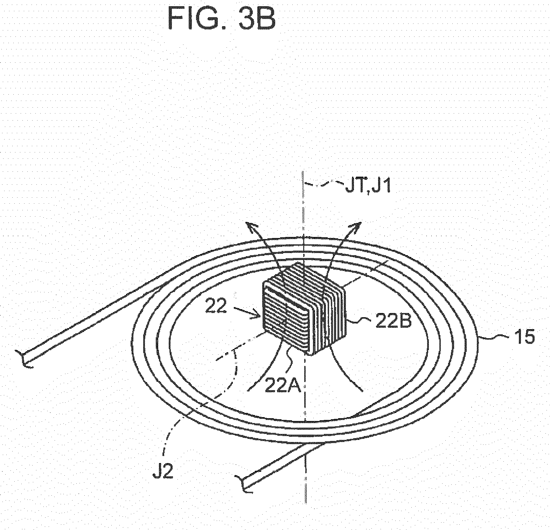

If electric shaver 40 is disposed in an upright state with respect to power transmission device 10 as illustrated in FIG. 3A, central axis JT of primary coil 15 is parallel with central axis J1 of power reception coil 22A, and is orthogonal to central axis J2 of power reception coil 22B as illustrated in FIG. 3B.

Accordingly, alternate magnetic flux output by primary coil 15 does not efficiently interlink with power reception coil 22B, but efficiently interlinks with power reception coil 22A. As a result, dc power is generated from alternate power generated in power reception coil 22A, and is supplied to secondary battery 41.

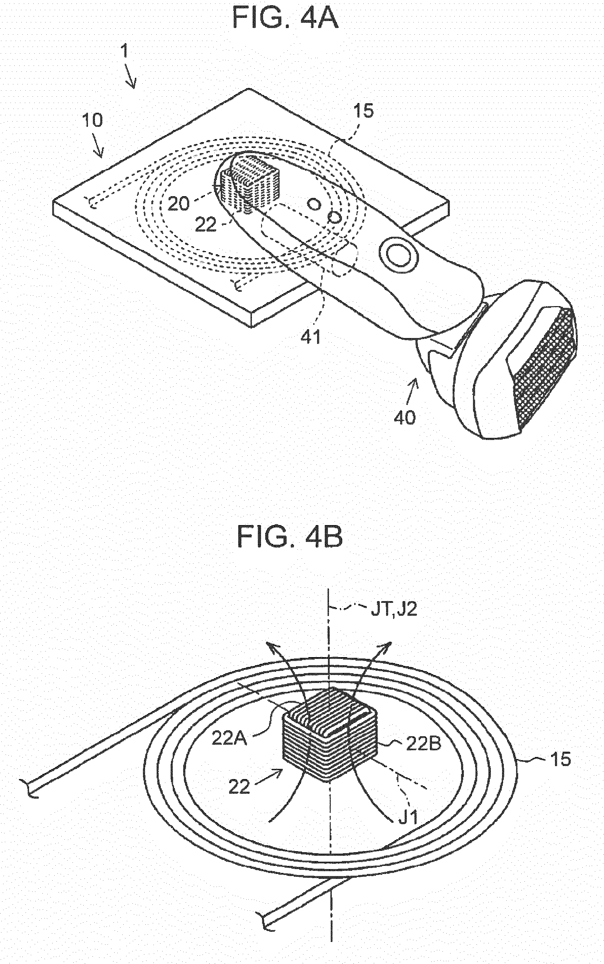

If electric shaver 40 is disposed in a lying state with respect to power transmission device 10 as illustrated in FIG. 4A, central axis JT of primary coil 15 is parallel with central axis J2 of power reception coil 22B, and is orthogonal to central axis J1 of power reception coil 22A, as illustrated in FIG. 4B.

Accordingly, alternate magnetic flux output by primary coil 15 does not efficiently interlink with power reception coil 22A, but efficiently interlinks with power reception coil 22B. As a result, dc power is generated from alternate power generated in power reception coil 22B, and is supplied to secondary battery 41.

According to the present exemplary embodiment, although electric shaver 40 is in an upright state or in a lying state with respect to power transmission device 10, power transmission can be performed, and directionality of power transmission is weakened. That is, when electric shaver 40 is charged by power transmission device 10, a degree of freedom in disposing electric shaver 40 is improved.

Meanwhile, a comparative power reception device also improves a degree of freedom in disposing a power transmission device in the same manner as in electric shaver 40. However, there is concern that the following problems occur in the comparative power reception device when a first resonance circuit and a second resonance circuit are designed.

In a case where load matching is taken between resonance circuit 14 (refer to FIG. 1) and the first resonance circuit of the comparative power reception device, capacitance of a capacitor in the first resonance circuit is set based on a coupling coefficient between primary coil 15 and power reception coil 22A of the comparative power reception device. That is, the capacitance of the capacitor in the first resonance circuit is set based on a coupling coefficient or the like designed on the premise that there is no magnetic interference with power reception coil 22A due to power reception coil 22B.

However, in a disposition situation of power reception coils 22A and 22B illustrated in FIG. 3B, alternate magnetic flux output by primary coil 15 slightly interlinks with power reception coil 22B, and thereby, alternate magnetic flux output by power reception coil 22B interlinks with power reception coil 22A.

Accordingly, when the coupling coefficient between primary coil 15 and power reception coil 22A of the comparative power reception device is measured, the measured coupling coefficient becomes a coupling coefficient in a state where power reception coil 22A interlinks with power reception coil 22B. As a result, there is a possibility that load matching is not taken actually for the calculated frequency based on the capacitance of the capacitor of first resonance circuit, differently from reference frequency fs in the design.

With respect to the coupling coefficient between primary coil 15 and power reception coil 22B of the comparative power reception device, alternate magnetic flux output by power reception coil 22A also becomes a coupling coefficient in a state of interlinking with power reception coil 22B in the same manner as above. Accordingly, there is a possibility that load matching is not taken actually in the same manner as the first resonance circuit.

In a disposition situation of power reception coils 22A and 22B illustrated in FIG. 4B, magnetic flux of one of power reception coils 22A and 22B also interlinks with the other, and thus, there is a possibility that load matching is not taken in the same manner as above.

If magnetic interference between power reception coil 22A and power reception coil 22B is considered, the problems can be solved. That is, capacitance of a resonance capacitor in the first resonance circuit is set by considering magnetic interference that power reception coil 22A receives from power reception coil 22B. Capacitance of a resonance capacitor in the second resonance circuit is set by considering magnetic interference that power reception coil 22B receives from power reception coil 22A.

However, calculation performed by considering such mutual magnetic interference is significantly hard to be performed, and design of a resonance circuit is complicated.

In the exemplary embodiment, one resonance circuit 21 (refer to FIG. 1) including power reception coils 22A and 22B is configured by connecting power reception coils 22A and 22B in series to each other. Load matching is taken based on resonance circuit 21. At this time, the load matching can be taken by using coupling coefficient k in a state where power reception coil 22A magnetically interferes with power reception coil 22B.

That is, load matching in which magnetic interference between power reception coil 22A and power reception coil 22B is considered can be taken, and a frequency of resonance circuit 21 coincides or approximately coincides with reference frequency fs. By doing so, a decrease of power transmission efficiency can be suppressed.

In addition, since power reception coils 22A and 22B are treated as one secondary coils 22, "L1 + L2" is used as self-inductance of secondary coils 22 and "r1 + r2" is used as resistance of secondary coils 22, as represented by Expression (1) and Expression (2). Accordingly, capacitances of resonance capacitors 23 and 24 are set by using simplified expressions represented in Expression (1) and Expression (2). As a result, it is possible to easily design resonance circuit 21.

According to the present exemplary embodiment, for example, the following effects are obtained.

(1) In the present exemplary embodiment, self-inductances and resistances of power reception coils 22A and 22B are set in advance, and load matching is taken between resonance circuit 14 and resonance circuit 21 in accordance with capacitance of resonance capacitor 23 and capacitance of resonance capacitor 24.

Constraint on the Resistances and the number of turns of power reception coils 22A and 22B for load matching between resonance circuit 14 and resonance circuit 21 is reduced, and thus, for example, resistances and the number of turns of power reception coils 22A and 22B can coincide with each other. As a result, variation of transmitted power according to disposition situation of electric shaver 40 with respect to power transmission device 10 is suppressed.

(2) In the present exemplary embodiment, power reception coils 22A and 22B and resonance capacitor 23 configure a series resonance circuit, and power reception coils 22A and 22B and resonance capacitor 24 configure a parallel resonance circuit.

According to the present exemplary embodiment, if a size of load 30 is in a range of larger than or equal to a size of load 30 when resonance circuit 21 resonates in series and of smaller than a size of load 30 when resonance circuit 21 resonates in parallel, efficient power transmission can be performed. That is, an applicable range of a size of load 30 can be expanded.

(3) In the present exemplary embodiment, capacitance Cs of resonance capacitor 23 is set by aforementioned Expression (1), and capacitance Cp of resonance capacitor 24 is set by aforementioned Expression (2). According to the present exemplary embodiment, since a frequency of resonance circuit 21 coincides or approximately coincides with reference frequency fs, load matching is taken.

(4) In the present exemplary embodiment, central axis J1 of power reception coil 22A is orthogonal to central axis J2 of power reception coil 22B. Accordingly, central axis JT of primary coil 15 is parallel with one of central axes J1 and J2 of power reception coils 22A and 22B in a state where electric shaver 40 is in an upright state and a lying state with respect to power transmission device 10.

Thereby, magnetic flux of primary coil 15 efficiently interlinks with one of power reception coils 22A and 22B. As a result, a decrease of power transmission efficiency is suppressed, and directionality of power transmission is weakened.

(5) In the present exemplary embodiment, power reception coil 22B is wound on power reception coil 22A in an overlapping manner. According to the present configuration, disposition space of secondary coils 22 can be reduced and power reception device 20 can be miniaturized, compared with a configuration in which power reception coil 22A is separately disposed from power reception coil 22B.

In the present exemplary embodiment, since a distance between power reception coil 22A and primary coil 15 is approximately equal to a distance between power reception coil 22B and primary coil 15, a coupling coefficient between power reception coil 22A and primary coil 15 does not differ significantly from a coupling coefficient between power reception coil 22B and primary coil 15.

Accordingly, although one of a coupling coefficient between power reception coil 22A and primary coil 15 and a coupling coefficient between power reception coil 22B and primary coil 15 is used for aforementioned Expression (1) and Expression (2), a decrease of power transmission efficiency can be suppressed.

(Modification Example)

A contactless power transmission device according to the present disclosure and a power reception device thereof can take one of, for example, the examples which will be described below, or a form in which at least two of the examples that do not conflict with each other are combined.

The electric shaver according to the present disclosure and a head thereof can take a form according to one example of, for example, the examples which will be described below, or a form in which at least two of the examples that do not conflict with each other are combined.

The number of resonance capacitors 23 and the number of resonance capacitors 24 may be two or more. One of resonance capacitor 23 and resonance capacitor 24 may be omitted.

Power reception coil 22B may be formed in a core different from core 27. In this case, power reception coil 22A is disposed at a different position from power reception coil 22B.

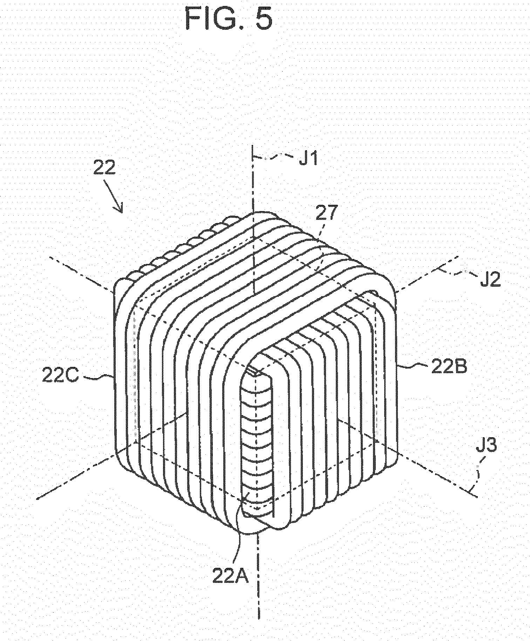

Secondary coils 22 may include power reception coil 22C connected in series to power reception coils 22A and 22B. FIG. 5 is a perspective view of secondary coils 22 according to one modification example.

As illustrated in FIG. 5, power reception coil 22C is wound on power reception coils 22A and 22B in an overlapping manner. That is, power reception coils 22A. 22B, and 22C share magnetic core 27. Power reception coils 22A. 22B, and 22C have the same number of turns. A conductive wire configuring power reception coil 22C has the same outer diameter as a conductive wire configuring power reception coils 22A and 22B.

Central axis J3 of power reception coil 22C is orthogonal to central axis J1 of power reception coil 22A and central axis J2 of power reception coil 22B. That is, central axes J1, J2, and J3 are orthogonal to each other. Power reception coil 22C corresponds to a third power reception coil.

According to the present configuration, if central axis JT (refer to FIG. 3B) of primary coil 15 is orthogonal to central axis J1 of power reception coil 22A and central axis J2 of power reception coil 22B, central axis JT of primary coil 15 is parallel to central axis J3 of power reception coil 22C.

Accordingly, although power reception device 20 is in a state other than an upright state and a lying state with respect to power transmission device 10, a decrease of power transmission efficiency can be suppressed, and directionality of power transmission is weakened.

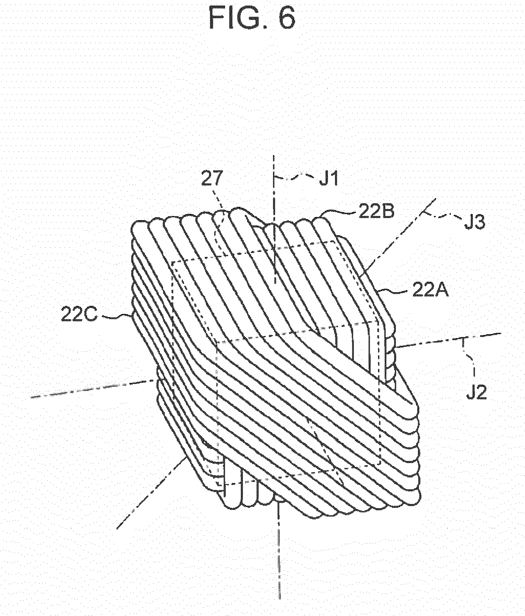

FIG. 6 is a perspective view of the secondary coil according to another modification example. As illustrated in FIG. 6, meanwhile central axis J1 of power reception coil 22A is orthogonal to central axis J2 of power reception coil 22B, central axis J3 of power reception coil 22C has an inclination of 45 degrees with respect to central axe J1 and J2 of power reception coils 22A and 22B.

According to the present configuration, if central axis JT (refer to FIG. 3B) of primary coil 15 is orthogonal to central axis J1 of power reception coil 22A and central axis J2 of power reception coil 22B, central axis JT of primary coil 15 is not orthogonal to central axis J3 of power reception coil 22C.

Accordingly, although power reception device 20 is in a state other than an upright state and a lying state with respect to power transmission device 10, a decrease of power transmission efficiency can be suppressed, and directionality of power transmission is weakened.

A coupling coefficient between primary coil 15 and power reception coil 22A may be smaller than a coupling coefficient between primary coil 15 and power reception coil 22B.

When a coupling coefficient between primary coil 15 and power reception coil 22A is used as coupling coefficient k of aforementioned Expression (1) and Expression (2), load matching is taken in a state where power reception device 20 is upright with respect to power transmission device 10. Accordingly, a decrease of power transmission efficiency is suppressed in a state where power reception device 20 is upright with respect to power transmission device 10.

Meanwhile, when a coupling coefficient between primary coil 15 and power reception coil 22B is used as coupling coefficient k of aforementioned Expression (1) and Expression (2), load matching is taken in a state where power reception device 20 lies with respect to power transmission device 10. The present configuration is effective in a case of power transmission device 10 (for example, electric shaver 40) having high possibility of power transmission in a state where the power reception device lies with respect to power transmission device 10.

A shape of core 27 may be a rectangle or a cylinder.

INDUSTRIAL APPLICABILITY

The present disclosure can be applied to a small electric appliance other than an electric shaver, such as an electric toothbrush, a portable apparatus, or a digital camera.

REFERENCE MARKS IN THE DRAWINGS

| | |
|---|---|
| 1 | contactless power transmission device |
| 10 | power transmission device |
| 11 | power supply circuit |
| 12 | switching circuit |
| 12A | FET |
| 12B | age-restricted merchandise |
| 13 | controller |
| 14, 21 | resonance circuit |
| 15 | primary coil |
| 16 | capacitor |
| 20 | power reception device |
| 22 | secondary coil |
| 22A, 22B, 22C | power reception coil |
| 23, 24 | resonance capacitor |
| 25 | rectification circuit |
| 26 | smoothing capacitor |
| 27 | core |
| 30 | load |
| 41 | secondary battery |

**Claims**

1. A power reception device which receives power without contact from a power transmission device including a primary coil, comprising:

   a plurality of secondary coils that interlinks with magnetic flux which is output by the primary coil; and
   at least one power reception side capacitor that is electrically connected to the plurality of secondary coils,
   wherein the plurality of secondary coils are connected in series to each other,
   wherein central axes of the plurality of secondary coils are oriented in mutually different directions, and
   wherein the plurality of secondary coils and the power reception side capacitor configure one power reception side resonance circuit.

2. The power reception device of Claim 1, wherein the power reception side capacitor includes a series resonance capacitor which is connected in series to the plurality of secondary coils, and a parallel resonance capacitor which is connected in parallel with the plurality of secondary coils.

3. The power reception device of Claim 2, wherein the plurality of secondary coils include a first power reception coil and a second power reception coil.

4. The power reception device of Claim 3, wherein capacitance Cs of the series resonance capacitor satisfies Expression (1) and Capacitance Cp of the parallel resonance capacitor satisfies Expression (2),

$$C_S = \frac{1}{\omega(r_1+r_2)} \frac{1}{Q_2 - \sqrt{\frac{R}{r_1+r_2}}\sqrt{1+k^2 \cdot Q_t \cdot Q_1} - (1+k^2 \cdot Q_t \cdot Q_1)} \qquad (1)$$

$$\left( Q_1 = \frac{\omega(L_1+L_2)}{r_1+r_2}, Q_2 = \frac{\omega L_t}{r_t} \right)$$

$$C_p = \frac{1}{\omega R}\sqrt{\frac{R}{(r_1+r_2)\sqrt{1+k^2 \cdot Q_t \cdot Q_1}} - 1} \qquad (2)$$

   where $\omega$ is an angular frequency ($\omega = 2\pi f$),
   $r_1$ is resistance of a first power reception coil,
   $r_2$ is resistance of a second power reception coil,
   $r_t$ is resistance of the primary coil,
   $Q_1$ is a characteristic value obtained by adding a characteristic value of the first power reception coil to a characteristic value of the second power reception coil,
   $Q_t$ is a characteristic value of the primary coil,
   R is a load electrically connected to a power reception device,
   K is a coupling coefficient between the primary coil and the secondary coils,
   $L_1$ is self-inductance of the first power reception coil,
   $L_2$ is self-inductance of the second power reception coil, and
   $L_t$ is self-inductance of the primary coil.

5. The power reception device of Claim 3, wherein a central axis of the first power reception coil is orthogonal to a central axis of the second power reception coil.

6. The power reception device of Claim 1, wherein the plurality of secondary coils includes a first power reception coil, a second power reception coil, and a third power reception coil.

7. The power reception device of Claim 6, wherein two central axes of power reception coils of the central axis of the first power reception coil, the central axis of the second power reception coil, and the central axis of the third power reception coil are orthogonal to each other.

8. The power reception device of Claim 6, wherein the central axis of the first power reception coil, the central axis of the second power reception coil, and the central axis of the third power reception coil are orthogonal to each other.

9. The power reception device of Claim 1, wherein the plurality of secondary coils is wound in an overlapping manner.

10. A contactless power transmission device comprising:

the power reception device of any one of Claims 1 to 9.

FIG. 1

EP 3 249 782 A1

# FIG. 2

# FIG. 3A

# FIG. 3B

# FIG. 4A

# FIG. 4B

## FIG. 5

# FIG. 6

## INTERNATIONAL SEARCH REPORT

| International application No. |
|---|
| PCT/JP2015/006288 |

### A. CLASSIFICATION OF SUBJECT MATTER
*H02J50/00*(2016.01)i, *H01F27/28*(2006.01)i, *H02J7/00*(2006.01)i

According to International Patent Classification (IPC) or to both national classification and IPC

### B. FIELDS SEARCHED

Minimum documentation searched (classification system followed by classification symbols)
H02J50/00, H01F27/28, H02J7/00

Documentation searched other than minimum documentation to the extent that such documents are included in the fields searched
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2013-223283 A  (Sumida Corp.),<br>28 October 2013 (28.10.2013),<br>paragraphs [0006], [0019] to [0024], [0077];<br>fig. 1, 4<br>(Family: none) | 1-3,5-10<br>4 |
| Y<br>A | JP 2011-101033 A  (Access Business Group<br>International L.L.C.),<br>19 May 2011 (19.05.2011),<br>paragraphs [0004], [0024]; fig. 14<br>& US 2004/0232845 A1<br>paragraphs [0005], [0041]; fig. 14<br>& WO 2004/073283 A2 | 1-3,5-10<br>4 |

☒ Further documents are listed in the continuation of Box C.   ☐ See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    06 January 2016 (06.01.16) | Date of mailing of the international search report<br>    19 January 2016 (19.01.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2015/006288 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y<br>A | JP 2014-96872 A　(Ikuo AWAI),<br>22 May 2014 (22.05.2014),<br>paragraphs [0023] to [0025]; fig. 6, 7<br>(Family: none) | 1-3,5-10<br>4 |
| A | JP 2011-182624 A　(Showa Aircraft Industry Co.,<br>Ltd.),<br>15 September 2011 (15.09.2011),<br>paragraph [0046]; fig. 1<br>(Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014036545 A